# EUROPEAN PATENT SPECIFICATION

(11) **EP 3 499 977 B1**
(45) Date of publication and mention of the grant of the patent: **02.06.2021**
(21) Application number: 17840750.8
(22) Date of filing: 31.03.2017
(51) Int. Cl.: H04W 52/02, H04L 12/70, H04W 84/12, H04W 88/06

(54) **METHOD AND DEVICE FOR SENDING AND RECEIVING WUR FRAME**
VERFAHREN UND VORRICHTUNG ZUM SENDEN UND EMPFANGEN EINES WUR-RAHMENS
PROCÉDÉ ET DISPOSITIF D'ENVOI ET DE RÉCEPTION DE TRAME WUR

(30) Priority: 19.08.2016 CN 201610698005; 05.09.2016 CN 201610805333; 01.03.2017 CN 201710118021
(43) Date of publication of application: 19.06.2019
(73) Proprietor: Huawei Technologies Co., Ltd., Longgang District Shenzhen, Guangdong 518129 (CN)
(72) Inventor: CHENG, Yong, Shenzhen Guangdong 518129 (CN); FANG, Ping, Shenzhen Guangdong 518129 (CN); DU, Zhenguo, Shenzhen Guangdong 518129 (CN); DING, Zhiming, Shenzhen Guangdong 518129 (CN)
(74) Representative: Maiwald Patent- und Rechtsanwaltsgesellschaft mbH
(86) International application number: PCT/CN2017/079078
(87) International publication number: WO 2018/032774

(56) References cited:
- WO-A1-2013/008989
- CN-A- 104 838 700
- CN-A- 105 745 890
- US-A1- 2015 334 650
- MINYOUNG PARK (INTEL CORP): "Proposal for wake-up receiver study group", IEEE DRAFT; 11-16-0722-01-0000-PROPOSAL-FOR-WAKE-UP-RE CEIVER-STUDY-GROUP, IEEE-SA MENTOR, PISCATAWAY, NJ USA , vol. 802.11, no. 1 18 May 2016 (2016-05-18), pages 1-14, XP068119646, Retrieved from the Internet: URL:https://mentor.ieee.org/802.11/dcn/16/ 11-16-0722-01-0000-proposal-for-wake-up-re ceiver-study-group.pptx [retrieved on 2016-05-18]
- DONGGUK LIM(LG ELECTRONICS): "WUR Frame Structure ; 11-17-0036-02-00ba-wur-frame-structure", IEEE DRAFT; 11-17-0036-02-00BA-WUR-FRAME-STRUCTURE, IEEE-SA MENTOR, PISCATAWAY, NJ USA , vol. 802.11ba, no. 2 17 January 2017 (2017-01-17), pages 1-16, XP068112431, Retrieved from the Internet: URL:https://mentor.ieee.org/802.11/dcn/17/ 11-17-0036-02-00ba-wur-frame-structure.ppt x [retrieved on 2017-01-17]

## Description

### TECHNICAL FIELD

The present invention relates to the field of communications technologies, and in particular, to a WUR frame sending and receiving method, and a device.

### BACKGROUND

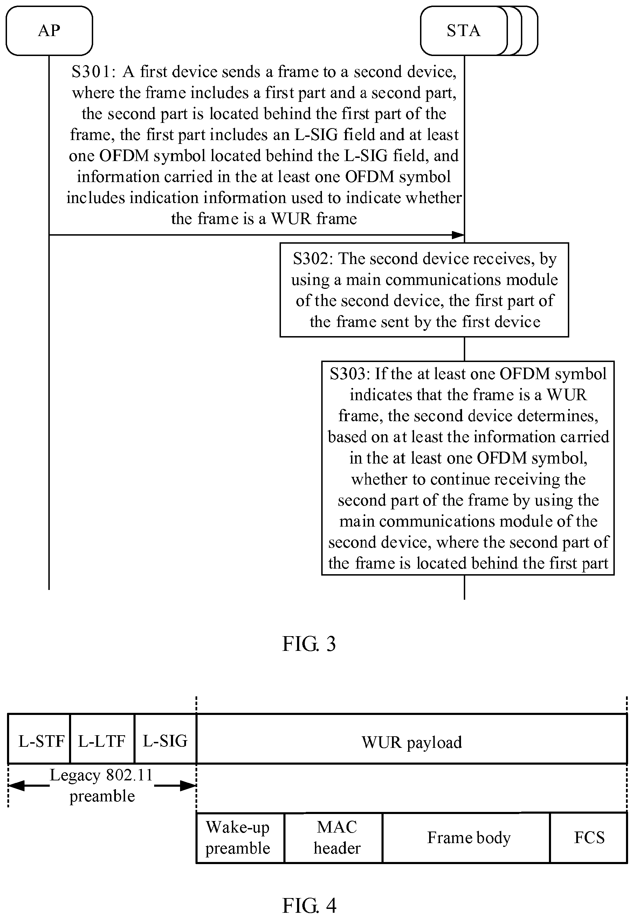

The IEEE 802.11 standard organization has recently established a task group (Task Group, TG) to research an ultra-low-power-consumption wake-up receiver (wake-up receiver, WUR) technology, expecting to use a wake-up receiver to reduce power consumption generated in a Wi-Fi technology and implement on-demand (on-demand) data transmission.
US 2015/334650 A1 describes systems and methods for techniques for allowing a wireless device to wake up a low power device while remaining compatible with other devices and wireless protocols. A first station determines that a low power device needs to wake up all or a portion of its circuitry in order to send and/or receive data from the first station. The first station sends a legacy preamble according to a standard wireless communication method such as according to IEEE 802.11 or Bluetooth addressed to the low power device.
The Article by MINYOUNG PARK (INTEL CORP): titled "Proposal for wake-up receiver study group", IEEE DRAFT, 11-16-0722-01 -0000-PROPOSAL-FOR-WAKE-UP-RECEIVER-STUDY-GROUP, IEEE-SA MENTOR, PISCATAWAY, NJ USA vol. 802.1 1, no. 1, published on 18 May 2016, pages 1-14, describes proposals for wake-up receiver study group.
The WUR is a low-power-consumption receiver interface added to a Wireless Fidelity (Wireless Fidelity, Wi-Fi) device. When no data is received or transmitted, a main communications module (such as a Wi-Fi module) of the device enters a deep sleep mode (for example, a transceiver of the main communications module is powered off), and an auxiliary wake-up module (such as a WUR module) is enabled for ultra-low power consumption listening. For example, when a first device (a waking-up device, for example, an access point (Access point)) needs to communicate with a second device (a waken-up device, for example, a station (Station, STA)), the first device first sends a wake-up packet (wake-up packet, WUP) to a WUR module of the second device. After receiving the wake-up packet, the WUR module of the second device views a receive address of the wake-up packet and confirms correctness and genuineness of the wake-up packet. If the receive address of the wake-up packet matches an address of the WUR module of the second device and the wake-up packet is genuine and correct, the WUR module of the second device may send a wake-up signal to a Wi-Fi communications module of the second device, to wake up the Wi-Fi communications module of the second device. After sending of the wake-up signal is completed, the WUR module of the second device may choose to enter a sleep state. Compared with directly enabling the Wi-Fi module to listen on a channel, using the WUR can significantly reduce power consumption of the STA device.
In the prior art, a WUR frame (for example, a WUR beacon frame or a wake-up packet WUP) is specially designed for a WUR module, and only the WUR module can identify and receive the WUR frame. As shown in FIG. 4, the prior-art WUR frame may include a legacy 802.11 preamble (Legacy 802.11 Preamble) and a WUR payload (WUR Payload). The legacy 802.11 preamble may include a legacy short training field (non-High-Throughput Short Training Field, L-STF), a legacy long training field (non-High-Throughput Long Training Field, LTF), and an L-SIG field. The WUR payload may include a wake-up preamble and a MAC portion. The wake-up preamble is used for symbol synchronization, WUR frame start identification, automatic gain control (Automatic Gain Control, AGC) adjustment, and the like. The MAC portion may include a MAC header and a frame body (Frame Body, FB), and may further include a frame check sequence (Frame Check Sequence, FCS).

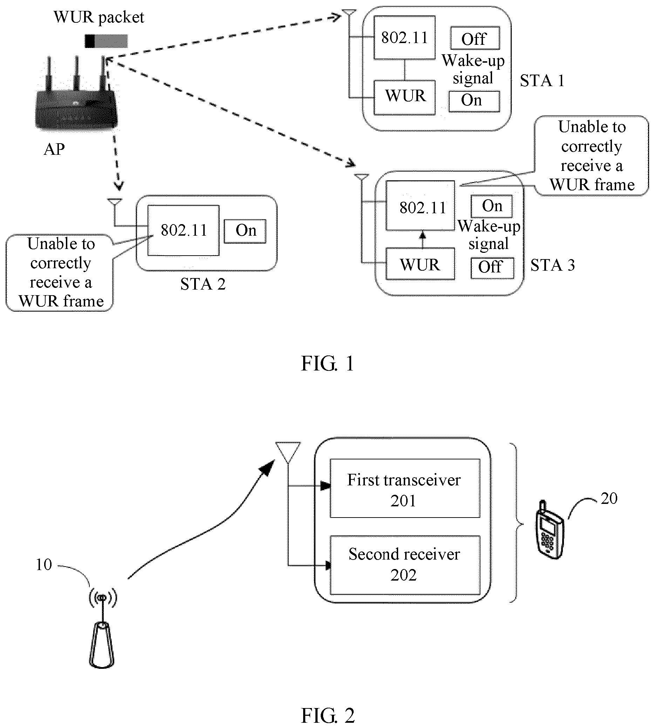

In a possible application scenario shown in FIG. 1, if a first device AP currently sends a WUR beacon frame and an unassociated STA 2 (the STA 2 without a WUR module) currently enables only a Wi-Fi interface, because only a WUR module can receive a WUR frame in the prior art, the unassociated STA 2 misses an opportunity for receiving a WUR beacon frame and discovering the AP. In another possible application scenario, if the first device AP currently sends a WUR frame and a Wi-Fi interface of a STA 3 is enabled, but an interface corresponding to a WUR module (that is, a WUR interface) of the STA 3 is disabled, the STA 3 cannot obtain the WUR frame sent by the AP. In the foregoing two scenarios, the WUR frames are not fully utilized, and consequently energy and air interface resources are wasted.

### SUMMARY

The present invention relates to WUR frame sending and receiving methods and devices and the present invention is set out in the appended set of claims, to resolve a problem in the prior art that a WUR frame is not fully utilized.

Based on the foregoing technical solutions, according to the WUR frame sending and receiving method, and the device that are provided in the embodiments of the present invention, the at least one OFDM symbol located behind the L-SIG field in the frame is used to indicate whether the frame is a WUR frame. According to the embodiments provided in the present invention, the Wi-Fi interface can identify a WUR frame, so that the WUR frame can be fully utilized, air interface efficiency is improved, and device power consumption is reduced.

### BRIEF DESCRIPTION OF DRAWINGS

FIG. 1 is a schematic diagram of WUR frame receiving in the prior art;
FIG. 2 is a schematic architectural diagram of a communications system according to an embodiment of the present invention;
FIG. 3 is a flowchart of a WUR frame sending and receiving method according to an embodiment of the present invention;
FIG. 4 is a schematic diagram of a WUR frame format in the prior art;
FIG. 5 is a flowchart of a WUR frame sending and receiving method according to an embodiment of the present invention;
FIG. 6a is a schematic diagram of a WUR frame format according to an embodiment of the present invention;
FIG. 6b is a schematic diagram of another WUR frame format according to an embodiment of the present invention;
FIG. 7 is a schematic structural diagram of a device according to an embodiment of the present invention;
FIG. 8 is a schematic structural diagram of another device according to an embodiment of the present invention;
FIG. 9 is a schematic structural diagram of a device according to an embodiment of the present invention; and
FIG. 10 is a schematic structural diagram of another device according to an embodiment of the present invention.

### DESCRIPTION OF EMBODIMENTS

FIG. 2 is a schematic architectural diagram of a communications system according to an embodiment of the present invention. The communications system includes a first device 10 and a second device 20. There may be more than one first device 10 or second device 20, but FIG. 2 shows only one first device 10 and second device 20 as an example for description.

The first device 10 sends a message to the second device 20, and the second device 20 receives the message sent by the first device 10. In a possible embodiment, the second device 20 includes a first transceiver 201 and a second receiver 202, and the second device 20 can receive, by using the first transceiver 201, a Wi-Fi message sent by the first device 10. After the second device 20 receives, by using the second receiver 202, a wake-up packet in a WUR format (the wake-up packet is a type of WUR frame) sent by the first device 10, the second device 20 wakes up the first transceiver 201 in a sleep state (for example, in a power-off state); and receives, by using the first transceiver 201, the Wi-Fi message sent by the first device 10 to the second device 20.

In a possible embodiment, the second device 20 may include a first transceiver 201. The first transceiver 201 may be provided by a main communications module, for example, provided by an 802.11 communications module. The first transceiver 201 may be configured to send and receive messages, where the messages include but are not limited to a Wi-Fi message and a WUR frame.

In a possible embodiment, the second device 20 further includes a second receiver 202. The second receiver 202 may be provided by an auxiliary wake-up module (such as a WUR). The second receiver 202 may be configured to: receive a wake-up packet in a WUR format sent by the first device 10; send a wake-up signal to the first transceiver 201 after receiving the wake-up packet, to wake up the first transceiver 201; and receive, by using the first transceiver 201, a Wi-Fi message subsequently sent by the first device 10.

It should be noted that the first device 10 and the second device 20 are interchangeable. For ease of description herein, an example in which the first device 10 sends a message to the second device 20 is used for description.

There may be a plurality of frame types for WUR frames in this specification, that is, there may be a plurality of types of WUR frames. The frame types for WUR frames may include the following several types (refer to Table 1).

A first type is a WUR beacon frame sent by an AP, to be specific, the WUR beacon frame broadcast by the AP, and may carry AP-related information, time synchronization information, and/or the like.

A second type is a STA-WUR wake-up packet sent by an AP, to be specific, a WUR wake-up packet sent by the AP to a STA. The WUR wake-up packet may be sent to a plurality of STAs in an OFDMA manner at the same time.

A third type is an AP-WUR wake-up packet sent by a STA, to be specific, a WUR wake-up packet sent by the STA to an AP.

With reference to the accompanying drawings, the following details, by using a specific embodiment, a WUR frame sending and receiving method, and a device that are provided in the embodiments of the present invention.

FIG. 3 is a flowchart of a WUR frame sending and receiving method according to an embodiment of the present invention. As shown in FIG. 3, the WUR frame sending and receiving method may include the following steps.

Step 301: A first device sends a frame to a second device, where the frame includes a first part and a second part, the second part of the frame is located behind the first part, the first part includes a legacy signal field L-SIG field (a legacy signal field, that is, a non-high-throughput (non-HT) signal field) and at least one OFDM symbol located behind the L-SIG field, and information carried in the at least one OFDM symbol includes indication information used to indicate whether the frame is a WUR frame. If the frame is a WUR frame, the information carried in the at least one OFDM symbol in the WUR frame includes indication information used to indicate that the frame is a WUR frame.

In a possible embodiment, the first device uses a Wi-Fi transceiver (that is, a Wi-Fi interface in compliance with the Wi-Fi standard protocol) to receive and send WUR frames. The first device may alternatively use a transceiver of another type (such as a WUR) to receive and send WUR frames. Details are not described herein.

In a possible embodiment, if the frame is a WUR frame (for example, the at least one OFDM symbol indicates that the frame is a WUR frame), an L-LENGTH field in the L-SIG field in the frame may be further used to indicate a specific frame type of the WUR frame, that is, indicate a type of WUR frame to which the WUR frame belongs.

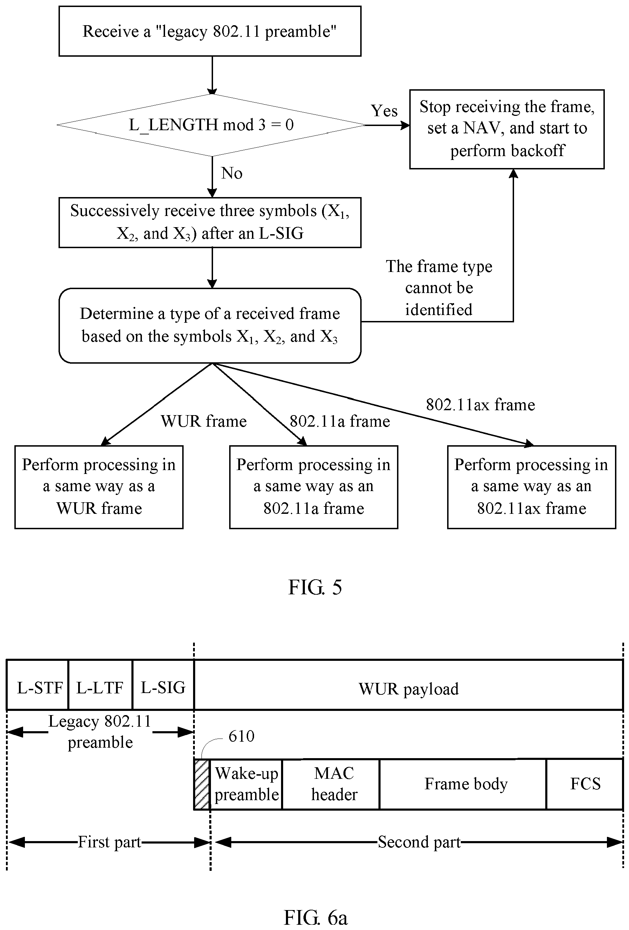

In a possible embodiment, the at least one OFDM symbol is in a wake-up preamble in the frame. As shown in FIG. 6a, at least one OFDM symbol 610 is in a wake-up preamble in a frame. The wake-up preamble in the frame is located behind the L-SIG field in the frame, and the second part of the frame includes content that is located behind the at least one OFDM symbol in the wake-up preamble.

That the at least one OFDM symbol is located behind the L-SIG field may include: The at least one OFDM symbol may be next to the L-SIG field (as shown in FIG. 6a, the at least one OFDM symbol 610 is in the wake-up preamble in the frame and is next to an L-SIG field), or the at least one OFDM symbol is not next to the L-SIG field but is located behind one or more symbols following the L-SIG field (each symbol may be an OOK symbol or an OFDM symbol). If the at least one OFDM symbol is next to the L-SIG field, after receiving a quite short part of information of the frame (for example, in this case, only a legacy 802.11 preamble in the frame and the at least one OFDM symbol next to the legacy 802.11 preamble need to be received), a device for receiving the frame, for example, a STA, can identify whether the frame is a WUR frame, to determine, based on a requirement of the STA, whether to continue receiving a remaining part of the frame, thereby reducing STA power consumption. If the at least one OFDM symbol is next to the L-SIG field, the second part includes content in the wake-up preamble except the at least one OFDM symbol. If the at least one OFDM symbol is not next to the L-SIG field, the second part does not include the at least one OFDM symbol in the wake-up preamble and content that is before the at least one OFDM symbol.

In a possible embodiment, the at least one OFDM symbol is N OFDM symbols, where 1≤N≤M, M is a quantity of symbols included in the wake-up preamble in the frame, and the symbol may be an OOK symbol or an OFDM symbol.

In a possible embodiment, the at least one OFDM symbol is between the L-SIG field and a wake-up preamble in the frame, the second part of the frame includes the wake-up preamble, and a location of the at least one OFDM symbol and a location of each field in a prior-art WUR frame do not overlap and are independent of each other. This makes an operation of identifying a WUR frame by the receiving device convenient and simple.

In a possible embodiment, the information carried in the at least one OFDM symbol further includes at least one of the following information: a result obtained by performing an XOR operation between content of the L-SIG field and a known bit sequence, a modulation and coding scheme of the frame, or a length of the frame.

In a possible embodiment, if the at least one OFDM symbol indicates that the frame is a WUR frame, the information carried in the at least one OFDM symbol may further include frame type indication information used to indicate a specific frame type of the WUR frame, that is, indicate a type of WUR frame to which the WUR frame belongs.

In a possible embodiment, the frame type of the WUR frame is one of the following: a wake-up packet or a wake-up radio beacon frame sent by an AP to a STA, or a wake-up packet sent by a STA to an AP.

In a possible embodiment, the information carried in the at least one OFDM symbol further includes identification information of a main communications interface of a target device for receiving the frame or identification information of an auxiliary wake-up interface of the target device for receiving the frame.

In a possible embodiment, the first part of the frame is a legacy 802.11 preamble, and the second part of the frame is a part or all of a WUR payload.

Step 302: The second device receives, by using a main communications module of the second device, the first part of the frame sent by the first device.

In a possible embodiment, the second device may use a Wi-Fi transceiver (that is, a Wi-Fi interface in compliance with the Wi-Fi standard protocol) to receive the frame (which may be a WUR frame). A specific example of the Wi-Fi interface is a Wi-Fi transceiver, and the Wi-Fi interface may be provided by the main communications module. The main communications module is configured to receive and send messages.

In a possible embodiment, the first device is an access point (Access Point, AP), the second device is a station (Station, STA), and there may be more than one AP or STA. When the STA is in a sleep state and the AP needs to send data to the STA, the AP first sends a WUR frame to the STA device before sending the data to the STA.

In another possible embodiment, the first device is a STA, the second device is an AP, and there may be more than one AP or STA. When the AP is in a sleep state and the STA needs to send data to the AP, the STA first sends a WUR frame to the AP before sending the data to the AP.

For ease of description, the following uses a scenario in which an AP sends a WUR frame to a STA as an example for description. Because a mechanism in which the STA sends a WUR frame to the AP is the same as a mechanism in which the AP sends a WUR frame to the STA, a process of sending a WUR frame by the STA to the AP is not described herein. In a possible embodiment, the AP sends a WUR frame by using a Wi-Fi interface or a WUR interface.

It should be noted that the WUR interface may be provided by an auxiliary wake-up module, and is configured to receive a wake-up packet sent by another device.

In a possible embodiment, the at least one OFDM symbol is located behind the L-SIG field in the frame, and the at least one OFDM symbol is used to indicate that the frame is a WUR frame.

The location of the at least one OFDM symbol in the frame may be one of the following three possible cases: (1) to (3).
(1) The at least one OFDM symbol is N OFDM symbols, where 1≤N≤M, the N OFDM symbols are symbols included in the wake-up preamble, and M is a quantity of symbols included in the wake-up preamble in the frame. The N OFDM symbols are used to indicate that the frame is a WUR frame.
In a possible embodiment, the N OFDM symbols are the first several symbols in the wake-up preamble, for example, three symbols.
In a possible embodiment, the first part includes the L-SIG field in the frame, where the L-SIG field includes the L-LENGTH field, and the L-LENGTH field is used to indicate the frame type of the frame.
Specifically, if determining that the frame is a WUR frame, the STA may further use the L-LENGTH field in the L-SIG field of the WUR frame to further determine the frame type of the WUR frame. For example, the specific frame type of the WUR frame may be determined based on a result obtained by performing a modulo operation on 3 by using a value of L-LENGTH in the L-SIG field of the WUR frame.
The frame type of the WUR frame may be listed in Table 1:

**Table 1**

| L-LENGTH in an L-SIG | Frame type of a WUR frame |
|---|---|
| L-LENGTH mod 3 = 1 | WUR beacon frame sent by an AP (a broadcast WUR frame such as SU-OFDM) |
| L-LENGTH mod 3 = 1 | WUR wake-up packet sent by a STA to an AP (an SU frame such as SU-OFDM) |
| L-LENGTH mod 3 = 2 | WUR wake-up packet sent by an AP to a STA (which may be an SU MU-OFDMA frame) |

In a possible embodiment, if determining that the frame is a WUR frame, the STA may determine, based on information about a receive address carried in the wake-up packet sent by the AP, whether to continue receiving the second part of the wake-up packet by using a Wi-Fi transceiver of the STA. For example, if the information about the receive address carried in the wake-up packet matches related address information of the STA, the STA determines to continue receiving the second part of the wake-up packet.
In another possible embodiment, if determining that the frame is a WUR frame, the STA may determine, based on a requirement of the STA, whether to continue receiving the second part of the WUR frame by using a Wi-Fi transceiver of the STA. For example, according to a frame type indication rule listed in Table 1, that the STA determines, based on a requirement of the STA, whether to continue receiving the second part of the WUR frame may include one or more of the following cases:
A first case: An unassociated STA receives a WUR beacon frame sent by an AP.
A second case: An associated STA receives a WUR beacon frame sent by an AP.
A third case: An associated STA overhears a WUR wake-up packet sent by another STA to an AP.

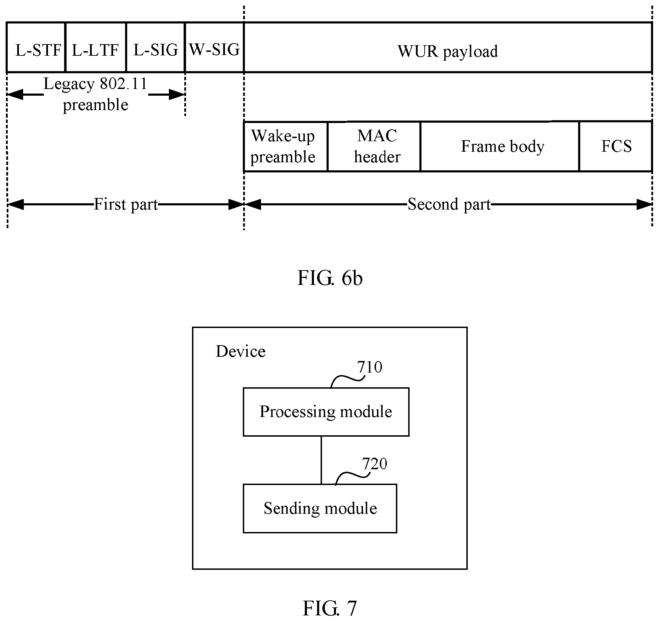

(2) Based on a prior-art WUR frame structure, the at least one OFDM symbol is added between the L-SIG field and the wake-up preamble, to indicate that the frame is a WUR frame.
As shown in FIG. 6b, specifically, one or more OFDM symbols are added between the L-SIG field and the wake-up preamble and may be referred to as a WUR SIG (W-SIG) field. The W-SIG field is used to indicate that the frame is a WUR frame. Further, the W-SIG field may be used to indicate a specific frame type of the WUR frame.
In a possible embodiment, during a process of receiving a frame by the STA, the STA may determine, based on one or more OFDM symbols after an L-SIG field, whether the frame is a WUR frame.
Specifically, in a possible embodiment, during the process of receiving a frame by the STA by using a Wi-Fi receiver of the STA, for example, after the STA receives a first part of the frame by using the Wi-Fi receiver of the STA, if the STA finds that the one or more OFDM symbols after the L-SIG field in the frame are a W-SIG field, the STA may determine that the frame is a WUR frame, and then the STA may continue receiving a second part of the frame by using the Wi-Fi receiver of the STA, or the STA may stop receiving the frame. If the STA finds that the one or more OFDM symbols after the L-SIG field are not a W-SIG field, the STA may determine that the frame is not a WUR frame, and then the STA may process the frame based on a case in which the frame is another frame.
(3) The at least one OFDM symbol is N OFDM symbols, where 1≤N≤M, M is a quantity of symbols included in the wake-up preamble in the frame, and the symbol may be an OOK symbol or an OFDM symbol. The N OFDM symbols are used to indicate whether the frame is a WUR frame.

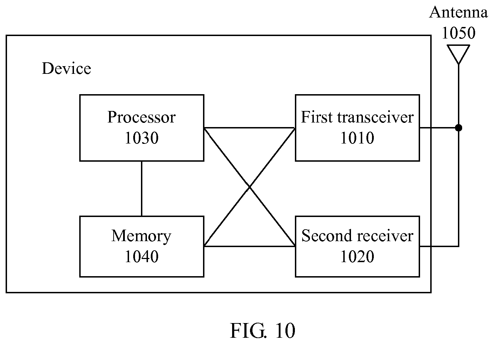

Specifically, in an embodiment, the Wi-Fi receiver may determine, based on the N OFDM symbols after the L-SIG field, whether the frame is a WUR frame (for example, the Wi-Fi receiver may include a microprocessor such as a DSP (Digital Signal Processor, digital signal processor), and the microprocessor determines, based on the N OFDM symbols after the L-SIG field, whether the frame is a WUR frame). A value of N may be a quantity M of symbols included in the wake-up preamble, or the value of N may be less than M. In another embodiment, a processor (for example, a processor marked as 1030 in FIG. 10) other than the Wi-Fi receiver of the STA may determine, based on the N OFDM symbols after the L-SIG field, whether the frame is a WUR frame.

Step 303: If the at least one OFDM symbol indicates that the frame is a WUR frame, the second device determines, based on at least the information carried in the at least one OFDM symbol, whether to continue receiving the second part of the frame by using the main communications module of the second device, where the second part of the frame is located behind the first part.

In a possible embodiment, continuing receiving, by the second device by using the main communications module of the second device, the second part of the frame if the at least one OFDM symbol indicates that the frame is a WUR frame includes: if the at least one OFDM symbol indicates that the frame is a WUR frame and a type of the frame is a frame type of the WUR frame, continuing receiving, by the second device, the second part of the frame by using the main communications module of the second device.

In a possible embodiment, the determining, by the second device based on at least the information carried in the at least one OFDM symbol, whether to continue receiving the second part of the frame by using the main communications module of the second device, if the at least one OFDM symbol indicates that the frame is a WUR frame includes: if the at least one OFDM symbol indicates that the frame is a WUR frame and a frame type of the WUR frame indicated by the L-LENGTH field satisfies a requirement of the device, continuing receiving, by the device, the second part of the frame by using the main communications module of the device.

In a possible embodiment, the determining, by the second device based on at least the information carried in the at least one OFDM symbol, whether to continue receiving the second part of the frame by using the main communications module of the device, if the at least one OFDM symbol indicates that the frame is a WUR frame includes: if the at least one OFDM symbol indicates that the frame is a WUR frame and a frame type of the WUR frame indicated by the L-LENGTH field does not satisfy a requirement of the device, stopping receiving, by the device, the frame.

It should be noted that the requirement of the device may be determined depending on a specific internal operation of the second device. For example, after receiving the first part of the frame, the second device determines that the frame is a WUR frame, but the second device stops receiving the frame because the second device is overloaded.

According to this embodiment of the present invention, the Wi-Fi interface can identify whether a frame is a WUR frame, so that the WUR frame can be fully utilized, air interface efficiency is improved, and energy consumption of the second device is reduced.

FIG. 4 shows a possible frame format of a prior-art WUR frame. When a prior-art Wi-Fi receiver, for example, an 802.11ax receiver, receives the WUR frame shown in FIG. 4, the Wi-Fi receiver identifies, based on a legacy 802.11 preamble (Legacy 802.11 Preamble), that the frame is an 802.11 frame, and completes operations such as AGC setting and symbol synchronization based on the legacy 802.11 preamble. The Wi-Fi receiver further determines, based on one or more OFDM symbols after an L-SIG field in the legacy 802.11 preamble, a type of frame to which the frame belongs: an 802.11a frame, an 802.1 In frame, an 802.11ac frame, or an 802.11ax frame. Because the frame shown in FIG. 4 is a WUR frame and the one or more OFDM symbols after the L-SIG field in the legacy 802.11 preamble is a part of a wake-up preamble, the prior-art Wi-Fi receiver cannot correctly determine a type of the frame (an 802.11a frame, an 802.11n frame, an 802.11ac frame, or an 802.11ax frame), and the prior-art Wi-Fi receiver receives and processes the frame in a same way as an 802.11a frame. If the Wi-Fi receiver receives and processes the frame according to a format of the 802.11a frame, an error occurs during frame check performed on the frame (that is, it is considered that an error occurs during a frame transmission process), and then the frame is discarded. Due to a structure of an existing WUR frame, the Wi-Fi receiver is incapable of identifying that the frame is a WUR frame when parsing the existing WUR frame, the Wi-Fi receiver receives and processes the frame in the same way as the 802.11a frame, an error occurs during frame check performed on the frame, and the frame is discarded finally. As a result, the existing WUR frame is not fully utilized, and energy consumption of the Wi-Fi receiver of a receiving device is wasted.

An embodiment of the present invention provides a technical solution that allows the Wi-Fi receiver to identify a WUR frame. For example, one or more OFDM symbols may be added between the L-SIG field in the legacy 802.11 preamble and the wake-up preamble, to indicate that the frame is a WUR frame. This helps the Wi-Fi receiver identify that the frame is a WUR frame, and therefore the Wi-Fi receiver can correctly receive and process the WUR frame. Alternatively, an operation of identifying whether the frame is a WUR frame by the Wi-Fi receiver is added to an operation of identifying a type of the frame by the Wi-Fi receiver. In an embodiment, when receiving a frame, the Wi-Fi receiver may determine a type of frame to which the received frame belongs: a WUR frame, an 802.11a frame, an 802.11n frame, an 802.11ac frame, or an 802.11ax frame. After correctly identifying that the frame is a WUR frame, the Wi-Fi receiver of the receiving device may choose, based on a requirement of the receiving device, whether to receive a remaining part of the WUR frame. In this way, the WUR frame is utilized more fully.

Optionally, in an embodiment of the present invention, the at least one OFDM symbol located behind the L-SIG field is a part of the wake-up preamble, the wake-up preamble is located behind the L-SIG field in the frame, and the second part of the frame includes content that is located behind the at least one OFDM symbol in the wake-up preamble.

Specifically, N (1≤N≤3) OFDM symbols after the L-SIG field are the first N symbols in the wake-up preamble.

In a possible embodiment, the STA may perform a modulo operation on 3 by using a value of L-LENGTH in the L-SIG field, to reduce processing unrelated to a frame.

Specifically, when L_LENGTH in an L-SIG field in a frame received by a Wi-Fi receiver of an 802.11ax device satisfies the condition listed in Table 1, the frame may be one of the following: (1) an 802.11a frame, (2) an 802.11ac frame, or (3) a WUR frame, but cannot be an 802.11n frame or an 802.11ac frame (because for a Wi-Fi frame in compliance with the 802.11n or 802.11ac standard, a result obtained by performing a modulo operation on 3 by using a value of L-LENGTH in the Wi-Fi frame can only be "0", and cannot satisfy the condition listed in Table 1).

The following uses several types of frames as examples for description.

There are three results obtained by performing a modulo operation on 3 by using a value of L-LENGTH in an L-SIG field in an 802.11a frame: "0", "1", and "2". A result obtained by performing a modulo operation on 3 by using a value of L-LENGTH in an L-SIG field in an 802.11n frame or an 802.11ac frame is "0". There may be two results obtained by performing a modulo operation on 3 by using a value of L-LENGTH in an L-SIG field in an 802.11ax frame: "1" and "2".

When the Wi-Fi receiver of the STA receives the frame and determines that L-LENGTH in the frame satisfies "L-LENGTH mod 3 = 0", the Wi-Fi receiver of the STA may stop perform receiving and further processing on the frame, or process the frame in a same way as another type of frame (such as an 802.11a frame, an 802.11n frame, or an 802.11ac frame).

In a possible embodiment, the at least one OFDM symbol is N OFDM symbols, where 1≤N≤3, and the N OFDM symbols are a part of the wake-up preamble. The N OFDM symbols are used to indicate that the frame is a WUR frame.

Specifically, the determining, by the Wi-Fi receiver based on the N OFDM symbols after the L-SIG field, that the received frame is a WUR frame includes the following operations.

It is assumed that in the N OFDM symbols after the L-SIG field, a first symbol is X1, a second symbol is X2, and a third symbol is X3. A step of determining, based on the three OFDM symbols, that the frame is a WUR frame may be shown in FIG. 5 and includes the following operations.

A first step: The Wi-Fi receiver parses the symbol X1 according to a decoding rule, to obtain a decoding result, that is, a bit sequence, where the decoding rule may be "802.11ax PHY RL-SIG", and a character length of the bit sequence is 24; and calculates a difference between the bit sequence and content of the L-SIG. For example, a Hamming distance (Hamming Distance) between the bit sequence and the content of the L-SIG may be calculated, to obtain the difference D1 between the bit sequence and the content of the L-SIG through calculation.

If D1 is equal to 0, it is determined that the received frame is an 802.11ax frame, and the 802.11ax receiver continues processing the received 802.11ax frame.

If D1 is not equal to 0, the Wi-Fi receiver parses two symbols (X2, X3) according to a decoding rue, to obtain a decoding result, that is, a bit sequence, where the decoding rule may be "802.11ax PHY HE-SIG-A", and a character length of the bit sequence is 52.
(1) If the bit sequence can succeed in a cyclic redundancy check (Cyclic Redundancy Check, CRC) for high efficiency signaling A (High efficiency signal A, HE-SIG-A) and the bit sequence can be identified by the Wi-Fi receiver, for example, the Wi-Fi receiver identifies that in the bit sequence, a BSS color field is valid, an MCS index field is valid, and/or a Tail field is valid, a difference between the bit sequence and HE-SIG-A is set to D2 = 0. In this case, it is determined that the frame is an 802.11ax frame, and the 802.11ax receiver continues processing the received 802.11ax frame.
(2) If the bit sequence cannot succeed in a CRC check for HE-SIG-A, a difference between the bit sequence and HE-SIG-A is set to D2 = 52, and a second step is performed.

The second step: The Wi-Fi receiver parses symbols (XI, X2) according to a decoding rule, to obtain a decoding result, that is, a bit sequence, where the decoding rule may be "802.11a MAC Service Field", and a character length of the bit sequence is 16; and calculates a difference between the bit sequence and content of "802.11a MAC Service Field". For example, a Hamming distance (Hamming Distance) between the bit sequence and the content of "802.11a MAC Service Field" may be calculated, and the difference D3 between the bit sequence and the content of "802.11a MAC Service Field" is recorded.

If D3 is equal to 0, it is determined that the frame is an 802.11a frame, and the Wi-Fi receiver continues processing the received 802.11a frame.

If D3 is not equal to 0, a third step is performed.

It should be noted that, a sequence of performing the first step and the second step by the Wi-Fi receiver is not fixed, and the second step may be performed before the first step, or the first step and the second step are performed simultaneously. The sequence of performing the first step and the second step by the 802.11ax receiver is not limited herein.

The third step: According to Table 1, when L-LENGTH mod 3 is equal to 1, it may be determined that the frame is a WUR beacon frame sent by an AP or a WUR wake-up packet sent by a STA to an AP.

The Wi-Fi receiver parses (XI, X2, X3) according to a decoding rule, to obtain a decoding result, that is, a bit sequence, where the decoding rule may be "Wake-up Preamble", and a character length of the bit sequence is 3; and calculates a difference between the bit sequence and the first three bits in the "wake-up preamble". For example, a Hamming distance between the bit sequence and the first three bits in the "wake-up preamble" may be calculated, to obtain the difference D4 through calculation.

If D4 is equal to 0, it is determined that the frame is a WUR frame, and a fourth step is performed to process the WUR frame, or the WUR frame stops being received.

If D4 is not equal to 0, the Wi-Fi receiver may stop receiving and processing the frame, set a network allocation vector (Network Allocation Vector, NAV), and start to perform backoff. A backoff time may be a time indicated by L-LENGTH, for example, ((8 × (2^L-LENGTH)) /R) seconds. For 802.1 In, 802.11ac, and 802.11ax, R is 6 Mbps; for 802.11a, R is a value specified for an MCS index in the L-SIG field, for example, 11 Mbps.

According to Table 1, when L-LENGTH mod 3 is equal to 2, the frame may be a WUR wake-up packet sent by an AP to a STA. For example, the AP may send a WUR wake-up packet to a plurality of STAs in an OFDMA manner at the same time, and the Wi-Fi receiver processes (XI, X2, X3) according to the OFDMA manner and a "wake-up preamble" modulation and coding scheme. For example, the Wi-Fi receiver processes only OFDM subcarrier information related to a WUR of the Wi-Fi receiver. The 802.11ax receiver obtains a decoding result of (X1, X2, X3), that is, a bit sequence, where a character length of the bit sequence is 3; and calculates a difference between the bit sequence and the first three bits in a "wake-up preamble". For example, a Hamming distance between the bit sequence and the first three bits in the "wake-up preamble" may be calculated, to obtain a difference D5 through calculation.

If D5 is equal to 0, it is determined that the frame is a WUR frame, and the fourth step is performed to process the WUR frame, or the WUR frame stops being received.

If D5 is not equal to 0, the Wi-Fi receiver may stop receiving and processing the frame, set a NAV, and start to perform backoff. A backoff time may be a time indicated by L-LENGTH, for example, ((8×(2^L-LENGTH))/R) seconds. For 802.11n, 802.11ac, and 802.11ax, R is 6 Mbps; for 802.11a, R is a value specified for an MCS index in the L-SIG field, for example, 11 Mbps.

It should be noted that, a sequence of performing the first step, the second step, and the third step by the Wi-Fi receiver is not fixed, and the third step may be performed before the second step or the first step, or the first step, the second step, and the third step are performed simultaneously. The sequence of performing the first step, the second step, and the third step by the 802.11ax receiver is not limited herein.

The fourth step: When it is determined that the received frame (actually only a part of the frame has been received) is a WUR frame, the Wi-Fi receiver continues receiving the frame (continues receiving a payload part of the WUR frame), and processes the frame in a same way as a WUR frame.

It should be noted that a quantity of N OFDM symbols after the L-SIG field may be one, two, or three. The foregoing only describes a process of determining that the frame is a WUR frame in terms of three OFDM symbols. Regardless of three OFDM symbols, two OFDM symbols, or one OFDM symbol, the OFDM symbol located behind the L-SIG field is used to indicate that the frame is a WUR frame.

In a possible implementation, the L-LENGTH field in the L-SIG field may be used to indicate a frame type of the WUR frame. Therefore, a case of one or two OFDM symbols is not additionally described herein.

In an embodiment of the present invention, the Wi-Fi receiver uses the L-LENGTH field in the L-SIG field of the "legacy 802.11 preamble" in the prior-art WUR frame and the three OFDM symbols after the "legacy 802.11 preamble" to determine that the frame is a WUR frame. In this embodiment of the present invention, a length of the "legacy 802.11 preamble" in the WUR frame is not increased, but the Wi-Fi receiver can accurately identify whether the frame is a WUR frame only through exhaustion judgment. Further, the Wi-Fi receiver may use the L_LENGTH field in the L-SIG field to identify the frame type of the WUR frame.

Optionally, in an embodiment of the present invention, the at least one OFDM symbol is between the L-SIG field and a wake-up preamble, as shown in FIG. 6b.

In this embodiment of the present invention, one or more fields are added between a "legacy 802.11 preamble" (that is, a legacy 802.11 preamble) and a "wake-up preamble" (that is, a wake-up preamble) in an existing WUR frame, where the one or more fields may be referred to as a WUR SIG (W-SIG) field, or may have other names. The W-SIG field may be one or more fields, and the W-SIG field may include one or more OFDM symbols. The W-SIG field may be used to indicate whether the frame is a WUR frame, as shown in FIG. 6b. Information carried in the W-SIG field includes indication information used to indicate whether the frame is a WUR frame, and may further include other information. In a possible embodiment, the W-SIG field may be a particular field, and the field itself may be used to indicate that the frame is a WUR frame. In other words, if the frame includes the W-SIG field, existence of this field may indicate that the frame is a WUR frame. In another possible embodiment, when values of some or all of bits in the W-SIG field in the frame are preset values, it may indicate that the frame is a WUR frame.

Specifically, during a process of receiving a frame by the Wi-Fi receiver, the Wi-Fi receiver may determine, based on one or N (where N is a positive integer, and N is greater than or equal to 2) OFDM symbols (herein the one or N OFDM symbols are referred to as a symbol X4) after an L-SIG field, whether the frame is a WUR frame. If the symbol X4 is a W-SIG field, it is determined that the frame is a WUR frame. If the symbol X4 is not a W-SIG field, the Wi-Fi receiver may process the frame in a same way as another type of frame, or may not perform any processing on the received frame. No limitation is imposed herein.

In a possible embodiment, content of the W-SIG field may carry a plurality of types of information. It is assumed that the content of the W-SIG field is defined as "XOR (XOR) between the L-SIG field and a known sequence S", that is, W-SIG = L-SIG XOR S. For example, S may be an all-ones sequence with a length of 24.

For example, the content of the W-SIG field may also indicate an adjustment and coding scheme of the WUR frame, a length of the WUR frame, and the like. A modulation and coding scheme used by an 802.11ax transmitter to transmit the W-SIG may be the same as that used to transmit the L-SIG, so that receiving processing performed by the Wi-Fi receiver or another Wi-Fi receiver on the W-SIG field can be simplified. The content of the W-SIG may alternatively be different from or unrelated to the content of the L-SIG, and the content carried in the W-SIG field may include but is not limited to one or more of the following content.

In a possible embodiment, if the content of the W-SIG field includes WUR frame indication information, the Wi-Fi receiver may identify a WUR frame based on the WUR frame indication information; and if determining that the frame is a WUR frame, continue receiving and processing the WUR frame. This can simplify an operation of identifying a WUR frame by the Wi-Fi receiver. The WUR frame indication information is used to indicate that a frame is a WUR frame, and may include one or more bits.

In a possible embodiment, if the content of the W-SIG field includes WUR frame type information, the Wi-Fi receiver may determine, based on the WUR frame type information, that the frame is an AP-WUR wake-up packet, a STA-WUP wake-up packet, or a WUR beacon frame, and continue receiving and processing the WUR frame. This can avoid that a Wi-Fi interface receives and processes a frame unrelated to the Wi-Fi interface. The WUR frame type information is used to indicate a WUR frame type, and the WUR frame type information may include one or more bits. The WUR frame type may be a wake-up packet, a broadcast WUR frame (such as a WUR beacon frame), or the like.

In a possible embodiment, if the content of the W-SIG field includes AP identification information, the Wi-Fi receiver may determine, based on the AP identification information, whether a target STA for receiving the WUR frame belongs to a basic service set (Basic Service Set, BSS) to which the Wi-Fi receiver belongs, so that the Wi-Fi receiver filters out a WUR frame that does not belong to the BSS to which the Wi-Fi receiver belongs. This can avoid that the Wi-Fi receiver receives and processes an unrelated frame. The AP identification information includes, for example, a MAC address or a compressed MAC address of an AP, a hash value of a MAC address of an AP, or a part of a MAC address of an AP.

In a possible embodiment, if the content of the W-SIG field includes identification information of a BSS to which an AP belongs, the Wi-Fi receiver may determine, based on the identification information of the BSS to which the AP belongs, whether a target device for receiving the WUR frame belongs to a BSS to which the Wi-Fi receiver belongs, so that the Wi-Fi receiver filters out a WUR frame that does not belong to the BSS to which the Wi-Fi receiver belongs. This can avoid that the Wi-Fi receiver receives and processes a frame unrelated to the Wi-Fi receiver. The identification information of the BSS to which the AP belongs includes, for example, a basic service set identifier (Basic Service Set Identifier, BBSID), a compressed BSSID, a hash value of a BSSID, a part of a BSSID, or a BSS color.

In a possible embodiment, if the content of the W-SIG includes identification information of a main communications interface (such as a Wi-Fi interface) of a target STA for receiving the WUR frame, the Wi-Fi receiver may identify, based on the identification information of the main communications interface of the target STA for receiving the WUR frame, the target device for receiving the WUR frame. This can avoid that the main communications interface receives and processes a WUR frame unrelated to the main communications interface, and can avoid that a plurality of STAs repeatedly send an AP-WUR wake-up packet. The identification information of the main communications interface (such as an 802.11 ax interface, where the 802.11 ax interface belongs to a type of Wi-Fi interface) of the target STA for receiving the WUR frame includes, for example, a MAC address or a compressed MAC address of the STA, a hash value of a MAC address of the STA, a part of a MAC address of the STA, an association identifier (Association Identifier, AID) of the STA, or information about a partial association identifier (Partial Association identifier, PAID) of the STA.

In a possible embodiment, if the content of the W-SIG field includes identification information of an auxiliary wake-up interface (such as a WUR interface) of a target STA for receiving the WUR frame, the Wi-Fi receiver may identify, based on the identification information of the auxiliary wake-up interface (such as the WUR interface) of the target STA for receiving the WUR frame, the target device for receiving the WUR frame. This avoids that the 802.11ax interface receives and processes a frame unrelated to the 802.11ax interface, and can avoid that a plurality of STAs repeatedly send an AP-WUR wake-up packet. The identification information of the auxiliary wake-up interface (such as the WUR interface) of the target STA for receiving the WUR frame includes, for example, a WUR interface address (WUR ID), a compressed WUR ID, a hash value of a WUR interface address, or a part of a WUR interface address.

In a possible embodiment, if the content of the W-SIG field includes WUR channel information, the Wi-Fi receiver may determine a sub-channel of a subsequent part (that is, an OOK modulation part) of the WUR frame based on the WUR channel information, so that the Wi-Fi receiver processes the subsequent part (that is, the OOK modulation part) of the WUR frame, for example, performs narrowband filtering processing. The WUR channel information may be used to indicate a WUR operating channel used for the WUR frame.

In an embodiment of the present invention, one or more OFDM symbols are added between a "legacy 802.11 preamble" and a "wake-up preamble" in an existing WUR frame, that is, a W-SIG, to indicate whether the frame is a WUR frame, and further indicate a type of WUR frame to which the frame belongs.

Optionally, in another embodiment of the present invention, the at least one OFDM symbol may be a part or all of the WUR frame. In this embodiment of the present invention, the Wi-Fi receiver may identify a WUR frame based on N OFDM symbols (the N OFDM symbols may be a part of a "wake-up preamble") after a "legacy 802.11 preamble", where N is greater than or equal to 1. A value of N herein may be a length M of the "wake-up preamble", that is, a quantity M of OOK or OFDM symbols included in the "wake-up preamble", for example, M = 10. Alternatively, N may be less than a length M of the "wake-up preamble", for example, the length of the "wake-up preamble" is M = 10, and N = 6. If an on-off keying (On-Off Keying, OOK) signal is generated by the 802.11ax transmitter, the OOK symbol is also an OFDM symbol.

During a process of receiving a frame by the Wi-Fi receiver, the determining, by the Wi-Fi receiver based on N OFDM symbols after the L-SIG, whether the frame is a WUR frame includes the following steps.

A first step: If content of the N OFDM symbols after the L-SIG indicates that the frame is an 802.11ax frame, it is determined that the frame is an 802.11ax frame. The Wi-Fi receiver processes the 802.11ax frame.

If content of the N OFDM symbols after the L-SIG field indicates that the frame is not an 802.11ax frame, it is determined that the frame is not an 802.11ax frame, and a second step is performed.

The second step: If the content of the N OFDM symbols after the L-SIG field indicates that the frame is an 802.11a frame (or an 802.11n frame or an 802.11ac frame), it is determined that the frame is an 802.11a frame (or an 802.11n frame or an 802.11ac frame). The Wi-Fi receiver processes the 802.11a frame, the 802.11n frame, or the 802.11ac frame.

If the content of the N OFDM symbols after the L-SIG field indicates that the frame is not an 802.11a frame (not an 802.1In frame or not an 802.11ac frame), a third step is performed.

It should be noted that, for the foregoing steps, the second step may be performed before the first step, or the first step and the second step are performed simultaneously. A sequence of performing the foregoing steps is not limited.

The third step: If the content of the N OFDM symbols after the L-SIG field is the same as content of the first N symbols in a "wake-up preamble", and may be content of a former part of the "wake-up preamble" or may be all content of the "wake-up preamble", it is determined that the received frame is a WUR frame, and the Wi-Fi receiver continues receiving the frame (continues receiving a payload part of the frame). A processing manner herein is the same as that of the fourth step in the foregoing embodiment. For ease of description, details are not described herein again.

If the content of the N OFDM symbols after the L-SIG field is not the same as content of the first N symbols in a "wake-up preamble", the frame is processed in a same way as another type of frame.

It should be noted that, a sequence of performing the first step, the second step, and the third step by the Wi-Fi receiver is not fixed, and the third step may be performed before the second step or the first step, or the first step, the second step, and the third step are performed simultaneously. The sequence of performing the first step, the second step, and the third step by the 802.11ax receiver is not limited herein.

In this embodiment of the present invention, a length of a physical frame header of the existing WUR frame is not increased, but a function of the existing WUR frame is improved. One or more symbols in the "wake-up preamble" in the existing WUR frame are utilized, so that the receiving device can efficiently identify whether a frame is a WUR frame. The Wi-Fi receiver may determine, based on the one or more symbols in the received "wake-up preamble" or all the content of the "wake-up preamble", whether the frame is a WUR frame, and may further determine a type of WUR frame to which the frame belongs.

Optionally, in an embodiment of the present invention, the STA may not use L_LENGTH to identify the frame type of the WUR frame, but uses content of the WUR frame to identify the frame type of the WUR frame. For details, refer to the foregoing embodiment of the present invention. The at least one OFDM symbol, that is, a W-SIG field, is added between the L-SIG field and the wake-up preamble. In a possible embodiment, the at least one OFDM symbol may be used to indicate that the frame is a WUR frame. In a possible embodiment, after it is determined that the frame is a WUR frame, the at least one OFDM symbol may be used to indicate the frame type of the WUR frame.

FIG. 7 is a schematic structural diagram of a device according to an embodiment of the present invention. The device may be configured to implement the method performed by an AP for sending a frame in each of the foregoing method embodiments. As shown in FIG. 7, the device may include: a processing module 710, configured to generate a frame, where the frame includes a first part and a second part, the second part of the frame is located behind the first part, the first part includes an L-SIG field and at least one OFDM symbol located behind the L-SIG field, and information carried in the at least one OFDM symbol includes indication information used to indicate whether the frame is a WUR frame; and a sending module 720, configured to send the frame.

In this embodiment of the present invention, the at least one OFDM symbol located behind the L-SIG field in the frame is used to indicate that the frame is a WUR frame.

In a possible embodiment, if the frame is a WUR frame, an L-LENGTH field in the L-SIG field may be used to indicate a frame type of the WUR frame.

In a possible embodiment, the at least one OFDM symbol is in a wake-up preamble in the frame, the wake-up preamble in the frame is located behind the L-SIG field in the frame, and the second part of the frame includes content that is located behind the at least one OFDM symbol in the wake-up preamble.

In a possible embodiment, the at least one OFDM symbol is N OFDM symbols, where 1≤N≤M, and M is a quantity of symbols included in the wake-up preamble in the frame.

Specifically, the at least one OFDM symbol located behind the L-SIG field is a part of the wake-up preamble. A Wi-Fi receiver needs to receive an entire "wake-up preamble", to determine whether the frame is a WUR frame. In addition, a length of a physical frame header of the WUR frame is not increased.

In a possible embodiment, the at least one OFDM symbol is between the L-SIG field and a wake-up preamble in the frame, and the second part of the frame includes the wake-up preamble.

Specifically, the at least one OFDM symbol is added between the L-SIG field and the "wake-up preamble". This simplifies an operation of identifying a WUR frame.

In a possible embodiment, the information carried in the at least one OFDM symbol further includes at least one of the following information: a result obtained by performing an XOR operation between content of the L-SIG and a known bit sequence, a modulation and coding scheme of the frame, or a length of the frame.

In a possible embodiment, if the at least one OFDM symbol indicates that the frame is a WUR frame, the information carried in the at least one OFDM symbol further includes frame type indication information used to indicate the frame type of the WUR frame.

In a possible embodiment, the frame type of the WUR frame is one of the following: a wake-up packet sent by an AP to a STA, a wake-up radio beacon frame sent by an AP to a STA, or a wake-up packet sent by a STA to an AP.

In a possible embodiment, the information carried in the at least one OFDM symbol further includes identification information of a main communications interface of a target device for receiving the frame or identification information of an auxiliary wake-up interface of the target device for receiving the frame.

In a possible embodiment, the first part of the frame includes a legacy 802.11 preamble, and the second part of the frame includes a part or all of a WUR payload.

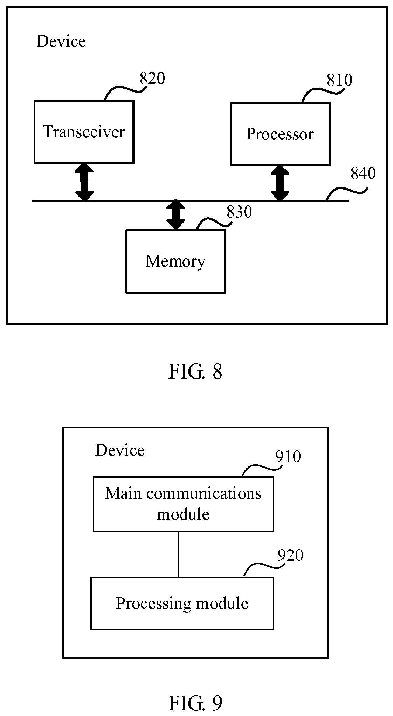

FIG. 8 is a schematic structural diagram of another device according to an embodiment of the present invention. As shown in FIG. 8, the device includes components such as a processor 810, a transceiver 820, and a memory 830.

The processor 810 may be replaced with the processing module 710 in FIG. 7. The processor 810 is configured to generate a frame, where the frame includes a first part and a second part, the second part of the frame is located behind the first part, the first part includes an L-SIG field and at least one OFDM symbol located behind the L-SIG field, and information carried in the at least one OFDM symbol includes indication information used to indicate whether the frame is a WUR frame. The transceiver 820 may be replaced with the sending module 720 in FIG. 7. The transceiver 820 is configured to send the frame.

The device may further include a bus 840. The processor 810, the transceiver 820, and the memory 830 may be connected to each other by using the bus 840. The bus 840 may be a Peripheral Component Interconnect (Peripheral Component Interconnect, PCI for short) bus, an Extended Industry Standard Architecture (Extended Industry Standard Architecture, EISA for short) bus, or the like. The bus 840 may be classified into an address bus, a data bus, a control bus, and the like. For ease of representation, the bus is represented by using only one bold line in FIG. 8, which, however, does not mean that there is only one bus or one type of bus.

In this embodiment of the present invention, the at least one OFDM symbol located behind the L-SIG field in the frame is used to indicate that the frame is a WUR frame.

In a possible embodiment, an L-LENGTH field in the L-SIG field may be used to indicate a frame type of the WUR frame.

In a possible embodiment, the at least one OFDM symbol is in a wake-up preamble in the frame, the wake-up preamble in the frame is located behind the L-SIG field in the frame, and the second part of the frame includes content that is located behind the at least one OFDM symbol in the wake-up preamble.

In a possible embodiment, the at least one OFDM symbol is N OFDM symbols, where 1≤N≤M, and M is a quantity of symbols included in the wake-up preamble in the frame.

Specifically, the at least one OFDM symbol located behind the L-SIG field is a part of the wake-up preamble. A Wi-Fi receiver needs to receive an entire "wake-up preamble", to determine whether the frame is a WUR frame. In addition, a length of a physical frame header of the frame is not increased.

In a possible embodiment, the at least one OFDM symbol is between the L-SIG field and a wake-up preamble in the frame, and the second part of the frame includes the wake-up preamble.

Specifically, the at least one OFDM symbol is added between the L-SIG field and the "wake-up preamble". This simplifies an operation of identifying a WUR frame.

In a possible embodiment, the information carried in the at least one OFDM symbol further includes at least one of the following information: a result obtained by performing an XOR operation between content of the L-SIG and a known bit sequence, a modulation and coding scheme of the frame, or a length of the frame.

In a possible embodiment, if the at least one OFDM symbol indicates that the frame is a WUR frame, the information carried in the at least one OFDM symbol further includes frame type indication information used to indicate the frame type of the WUR frame.

In a possible embodiment, the frame type of the WUR frame is one of the following: a wake-up packet sent by an AP to a STA, a wake-up radio beacon frame sent by an AP to a STA, or a wake-up packet sent by a STA to an AP.

In a possible embodiment, the information carried in the at least one OFDM symbol further includes identification information of a main communications interface of a target device for receiving the frame or identification information of an auxiliary wake-up interface of the target device for receiving the frame.

In a possible embodiment, the first part of the frame includes a legacy 802.11 preamble, and the second part of the frame includes a part or all of a WUR payload.

In an actual product, the device may be implemented by a system-on-a-chip (System-on-a-chip, SoC) or an integrated circuit.

FIG. 9 is a schematic structural diagram of another device according to an embodiment of the present invention. The device may be configured to implement the method performed by a STA for receiving a frame in each of the foregoing method embodiments. As shown in FIG. 9, the device includes: a main communications module 910, configured to receive a first part of a frame, where the first part includes an L-SIG field and at least one OFDM symbol located behind the L-SIG field, and information carried in the at least one OFDM symbol includes indication information used to indicate whether the frame is a WUR frame; a processing module 920, configured to: determine, based on the at least one OFDM symbol, whether the frame is a WUR frame; and if determining that the frame is a WUR frame, determine, based on at least the information carried in the at least one OFDM symbol, whether to continue receiving a second part of the frame by using the main communications module 910. The second part of the frame is located behind the first part. The processing module 920 may be a component inside the main communications module 910, such as a microprocessor; or the processing module 920 may include a plurality of components, for example, may include one microprocessor and one processor (such as a CPU), where the microprocessor or the processor may be independent of the processing module 920, or the microprocessor or the processor may be integrated into the processing module 920. The microprocessor or the processor may separately perform some processing operations, to implement a function performed by the processing module 920.

In this embodiment of the present invention, based on the first part of the frame received by the main communications module 910, the information carried in the at least one OFDM symbol located behind the L-SIG field of the first part includes the indication information used to indicate whether the frame is a WUR frame. If determining, based on the at least one OFDM symbol, that the frame is a WUR frame, the processing module 920 determines, based on at least one OFDM symbol, whether to continue receiving the second part of the frame by using the main communications module 910.

In a possible embodiment, if the frame is a WUR frame, the first part includes the L-SIG field in the frame, where the L-SIG field includes an L-LENGTH field, and the L-LENGTH field is used to indicate a frame type of the WUR frame.

Specifically, after it is determined that the frame is a WUR frame, the L-LENGTH field in the L-SIG field in the frame may be used to indicate the frame type of the frame.

In a possible embodiment, that the processing module 920 is configured to: determine, based on the at least one OFDM symbol, whether the frame is a WUR frame; and if determining that the frame is a WUR frame, determine, based on at least the information carried in the at least one OFDM symbol, whether to continue receiving a second part of the frame by using the main communications module 910 includes: if the at least one OFDM symbol indicates that the frame is a WUR frame and a type of the frame is the frame type of the WUR frame, determining, by the processing module 920, to continue receiving the second part of the frame by using the main communications module 910.

In a possible embodiment, that the processing module 920 is configured to: determine, based on the at least one OFDM symbol, whether the frame is a WUR frame; and if determining that the frame is a WUR frame, determine, based on at least the information carried in the at least one OFDM symbol, whether to continue receiving a second part of the frame by using the main communications module 910 includes: if the at least one OFDM symbol indicates that the frame is a WUR frame and a frame type of the WUR frame indicated by the L-LENGTH field does not satisfy a requirement of the device, stopping receiving, by the main communications module 910, the frame.

In a possible embodiment, the at least one OFDM symbol is in a wake-up preamble included in the second part in the frame, the wake-up preamble in the frame is located behind the L-SIG field in the frame, and the second part of the frame includes content that is located behind the at least one OFDM symbol in the wake-up preamble. In other words, the at least one OFDM symbol is located behind the L-SIG field.

In a possible embodiment, the at least one OFDM symbol is N OFDM symbols, where 1≤N≤M, and M is a quantity of symbols included in the wake-up preamble in the frame.

Specifically, the at least one OFDM symbol located behind the L-SIG field is a part of the wake-up preamble. A Wi-Fi receiver needs to receive an entire "wake-up preamble", to determine whether the frame is a WUR frame. In addition, a length of a physical frame header of the frame is not increased.

In a possible embodiment, the at least one OFDM symbol is between the L-SIG field and a wake-up preamble in the frame.

Specifically, the at least one OFDM symbol is added between the L-SIG field and the "wake-up preamble". This simplifies an operation of identifying a WUR frame.

In a possible embodiment, the information carried in the at least one OFDM symbol further includes at least one of the following information: a result obtained by performing an XOR operation between content of the L-SIG and a known bit sequence, a modulation and coding scheme of the frame, or a length of the frame.

In a possible embodiment, if the at least one OFDM symbol indicates that the frame is a WUR frame, the information carried in the at least one OFDM symbol further includes frame type indication information used to indicate the frame type of the WUR frame.

In a possible embodiment, the information carried in the at least one OFDM symbol further includes identification information of a main communications interface of a target device for receiving the frame or identification information of an auxiliary wake-up interface of the target device for receiving the frame.

In a possible embodiment, the first part of the frame is a legacy 802.11 preamble, and the second part of the frame is a part or all of a WUR payload.

FIG. 10 is a schematic structural diagram of another device according to an embodiment of the present invention. As shown in FIG. 10, the device includes a first transceiver 1010, a processor 1030, a memory 1040, and an antenna 1050.

The first transceiver 1010 is a specific description of a main communications interface (such as a Wi-Fi interface), and may be provided by a main communications module (such as an 802.11 communications module). The first transceiver 1010 may be configured to send and receive messages (including receiving of a frame sent by a first device), and may be replaced with the main communications module 910 in FIG. 9. The first transceiver 1010 is configured to receive a first part of the frame, where the first part includes an L-SIG field and at least one OFDM symbol located behind the L-SIG field, and information carried in the at least one OFDM symbol includes indication information used to indicate whether the frame is a WUR frame. The processor 1030 may be replaced with the processing module 920 in FIG. 9. The processor 1030 is configured to: determine, based on the at least one OFDM symbol, whether the frame is a WUR frame; and if determining that the frame is a WUR frame, determine, based on at least the information carried in the at least one OFDM symbol, whether to continue receiving a second part of the frame by using the first transceiver 1010. The second part of the frame is located behind the first part.

In a possible embodiment, that the processor 1030 is configured to: determine, based on the at least one OFDM symbol, whether the frame is a WUR frame; and if determining that the frame is a WUR frame, determine, based on at least the information carried in the at least one OFDM symbol, whether to continue receiving a second part of the frame by using the first transceiver 1010 includes: if the at least one OFDM symbol indicates that the frame is a WUR frame and a type of the frame is a frame type of the WUR frame, determining, by the processor 1030, to continue receiving the second part of the frame by using the first transceiver 1010.

In a possible embodiment, that the processor 1030 is configured to: determine, based on the at least one OFDM symbol, whether the frame is a WUR frame; and if determining that the frame is a WUR frame, determine, based on at least the information carried in the at least one OFDM symbol, whether to continue receiving a second part of the frame by using the first transceiver 1010 includes: if the at least one OFDM symbol indicates that the frame is a WUR frame and a frame type of the WUR frame indicated by an L-LENGTH field does not satisfy a requirement of the device, stopping receiving, by the first transceiver 1010, the frame.

In a possible embodiment, the second device further includes a second receiver 1020. The second receiver 1020 is a specific description of an auxiliary communications interface, and may be provided by an auxiliary wake-up module. The second receiver 1020 may be configured to: receive a wake-up packet sent by the waking-up device, and send a wake-up signal to the first transceiver 1010 after receiving the wake-up packet, to wake up the first transceiver 1010.

There may be one or more memories 1040, and the memory 1040 and the processor 1030 may be shared by the first transceiver 1010 and the second receiver 1020.

The first transceiver 1010 and the second receiver 1020 can share the same antenna 1050. Sharing the same antenna 1050 is to reduce hardware costs of the device and simplify implementation. However, when the first transceiver 1010 and the second receiver 1020 operate at different frequency bands, different antennas need to be used, to satisfy actual operating requirements.

In an actual product, the device may be implemented by a system-on-a-chip (System-on-a-chip, SoC) or an integrated circuit.

According to the embodiments provided in the present invention, a STA can receive a WUR frame by using an 802.11 interface, so that the WUR frame is fully utilized, air interface efficiency is improved, and device energy consumption is reduced. Specific technical effects may include one or more of the following effects.

An unassociated STA may receive, by using an 802.11 interface, a WUR beacon frame sent by an AP, to discover the AP and obtain AP-related information. This can reduce a time for discovering the AP by the unassociated STA, and reduces a delay for associating the STA.

An associated STA may receive, by using a Wi-Fi interface, a WUR beacon frame sent by an AP, to perform time synchronization. In this way, the WUR beacon frame is fully utilized, air interface efficiency is improved, and system energy consumption is reduced.

An associated STA may receive, by using a Wi-Fi interface, a STA-WUR wake-up packet sent by an AP, to respond to the AP in time. This reduces a data transmission delay.

An associated STA may overhear, by using a Wi-Fi interface, an AP-WUR wake-up packet sent by another STA. This avoids that an AP-WUR wake-up packet is sent repeatedly, reduces energy consumption of the STA, improves air interface efficiency, and reduces a possibility that privacy of the STA is exposed.

A person skilled in the art may be further aware that, in combination with the examples described in the embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person of ordinary skill in the art may understand that all or a part of the steps in the methods of the foregoing embodiments may be implemented by a program instructing a processor. The program may be stored in a computer readable storage medium. The storage medium may be a non-transitory (non-transitory) medium, such as a random-access memory, a read-only memory, a flash memory, a hard disk, a solid state disk, a magnetic tape (magnetic tape), a floppy disk (floppy disk), an optical disc (optical disc), or any combination thereof.

Mutual reference may be made to related parts of the method embodiments of the present invention. An apparatus provided in each apparatus embodiment is configured to perform a method provided in a corresponding method embodiment, and therefore for each apparatus embodiment, reference may be made to a related part in a related method embodiment for understanding.

Names of a message/frame and a module or a unit that are provided in each embodiment of the present invention are merely examples, and there may be other names provided that functions of a message/frame and a module or a unit are the same as those described in the present invention.

The foregoing descriptions are merely examples of specific implementations of this application, but are not intended to limit the protection scope of this application. The protection scope of this application shall be subject to the protection scope of the clams.

## Claims

1. A device, wherein the device comprises:
a main communications module (910), configured to receive a first part of a frame, wherein the first part comprises an L-SIG field and at least one OFDM symbol located following the L-SIG field, and information carried in the at least one OFDM symbol comprises indication information used to indicate whether the frame is a, wake-up receiver, WUR frame; and
a processing module (920), configured to: determine, based on the at least one OFDM symbol, whether the frame is a WUR frame; and if determining that the frame is a WUR frame, determine, based on at least the information carried in the at least one OFDM symbol, whether to continue receiving a second part of the frame by using the main communications module, wherein the second part of the frame is located following the first part, wherein the L-SIG field comprises an L-LENGTH field, and if the frame is a WUR frame, the L-LENGTH field is used to indicate a frame type of the WUR frame.

2. The device according to claim 1, wherein that the processing module is configured to:
determine, based on the at least one OFDM symbol, whether the frame is a WUR frame; and
if determining that the frame is a WUR frame, determine, based on at least the information carried in the at least one OFDM symbol, whether to continue receiving a second part of the frame by using the main communications module comprises:
if the at least one OFDM symbol indicates that the frame is a WUR frame and a type of the frame is the frame type of the WUR frame, determining, by the processing module, to continue receiving the second part of the frame by using the main communications module.

3. The device according to any one of claims 1 to 2, wherein the at least one OFDM symbol is in a wake-up preamble in the frame, the wake-up preamble in the frame is located following the L-SIG field in the frame, and the second part of the frame comprises content that is located following the at least one OFDM symbol in the wake-up preamble.

4. The device according to claim 3, wherein the at least one OFDM symbol is N OFDM symbols, wherein 1≤N≤M, and M is a quantity of symbols comprised in the wake-up preamble in the frame.

5. The device according to any one of claims 1 to 2, wherein the at least one OFDM symbol is between the L-SIG field and a wake-up preamble in the frame, and the second part of the frame comprises the wake-up preamble.

6. The device according to any one of claims 1 to 5, wherein the information carried in the at least one OFDM symbol further comprises at least one of the following information: a result obtained by performing an XOR operation between content of the L-SIG and a known bit sequence, a modulation and coding scheme of the frame, or a length of the frame.

7. The device according to any one of claims 1 to 6, wherein if the at least one OFDM symbol indicates that the frame is a WUR frame, the information carried in the at least one OFDM symbol further comprises frame type indication information used to indicate the frame type of the WUR frame.

8. The device according to any one of claims 1 to 7, wherein the frame type of the WUR frame is one of the following: a wake-up packet sent by an AP to a STA, a wake-up radio beacon frame sent by an AP to a STA, or a wake-up packet sent by a STA to an AP.

9. The device according to any one of claims 1 to 8, wherein the information carried in the at least one OFDM symbol further comprises identification information of a main communications interface of a target device for receiving the frame or identification information of an auxiliary wake-up interface of the target device for receiving the frame.

10. The device according to any one of claims 1 to 9, wherein the first part of the frame comprises a legacy 802.11 preamble, and the second part of the frame comprises a part or all of a WUR payload.

11. A device, wherein the device comprises:
a processing module (720), configured to generate a frame, wherein the frame comprises a first part and a second part, the second part of the frame is located following the first part, the first part comprises an L-SIG field and at least one OFDM symbol located following the L-SIG field, and information carried in the at least one OFDM symbol comprises indication information used to indicate whether the frame is a WUR frame; and
a sending module (710), configured to send the frame, wherein the L-SIG field comprises an L-LENGTH field, and if the frame is a WUR frame, the L-LENGTH field is used to indicate a frame type of the WUR frame.

12. The device according to claim 11, wherein the at least one OFDM symbol is in a wake-up preamble in the frame, the wake-up preamble in the frame is located following the L-SIG field in the frame, and the second part of the frame comprises content that is located following the at least one OFDM symbol in the wake-up preamble.

13. A method comprising steps corresponding to the functions as implemented in the main communications module (910) and the processing module (920) of the device according to any one of claims 1 to 10.

14. A method comprising steps corresponding to the functions as implemented in the processing module (720) and the sending module (710) of the device according to claims 11 or 12.

## Patentansprüche

1. Vorrichtung, wobei die Vorrichtung Folgendes umfasst:
ein Hauptkommunikationsmodul (910), das konfiguriert ist, um einen ersten Teil eines Frames zu empfangen, wobei der erste Teil ein L-SIG-Feld und wenigstens ein OFDM-Symbol umfasst, das nach dem L-SIG-Feld gelegen ist, und Informationen, die in dem wenigstens einen OFDM-Symbol übertragen werden, Anzeigeinformationen umfassen, die verwendet werden, um anzuzeigen, ob der Frame ein Wake-up-*Empfänger*(*wake-up receiver -* WUR)-Frame ist; und
ein Verarbeitungsmodul (920), das für Folgendes konfiguriert ist: Bestimmen, basierend auf dem wenigstens einen OFDM-Symbol, ob der Frame ein WUR-Frame ist; und falls bestimmt wird, dass der Frame ein WUR-Frame ist, Bestimmen, basierend auf wenigstens den Informationen, die in dem wenigstens einen OFDM-Symbol übertragen werden, ob weiterhin ein zweiter Teil des Frames durch Verwenden des Hauptkommunikationsmoduls empfangen werden soll, wobei der zweite Teil des Frames nach dem ersten Teil gelegen ist, wobei das L-SIG-Feld ein L-LENGTH-Feld umfasst, und, falls der Frame ein WUR-Frame ist, das L-LENGTH-Feld verwendet wird, um eine Frame-Art des WUR-Frames anzuzeigen.

2. Vorrichtung nach Anspruch 1, wobei, dass das Verarbeitungsmodul konfiguriert ist, um, basierend auf dem wenigstens einen OFDM-Symbol zu bestimmen, ob der Frame ein WUR-Frame ist; und falls bestimmt wird, dass der Frame ein WUR-Frame ist, basierend auf wenigstens den Informationen, die in dem wenigstens einen OFDM-Symbol übertragen werden, zu bestimmen, ob weiterhin ein zweiter Teil des Frames durch Verwenden des Hauptkommunikationsmoduls empfangen werden soll, Folgendes umfasst:
falls das wenigstens eine OFDM-Symbol anzeigt, dass der Frame ein WUR-Frame ist und eine Art des Frames die Frame-Art des WUR-Frames ist, Bestimmen, durch das Verarbeitungsmodul, dass weiterhin der zweiten Teil des Frames durch Verwenden des Hauptkommunikationsmoduls empfangen wird.

3. Vorrichtung nach einem der Ansprüche 1 bis 2, wobei sich das wenigstens eine OFDM-Symbol in einer Wake-up-Präambel in dem Frame befindet, die Wake-up-Präambel in dem Frame nach dem L-SIG-Feld in dem Frame gelegen ist, und der zweite Teil des Frames einen Inhalt umfasst, der nach dem wenigstens einen OFDM-Symbol in der Wake-up-Präambel gelegen ist.

4. Vorrichtung nach Anspruch 3, wobei das wenigstens eine OFDM-Symbol N OFDM-Symbole ist, wobei 1≤N≤M und M eine Menge von Symbolen ist, die in der Wake-up-Präambel in dem Frame enthalten sind.

5. Vorrichtung nach einem der Ansprüche 1 bis 2, wobei sich das wenigstens eine OFDM-Symbol zwischen dem L-SIG-Feld und einer Wake-up-Präambel in dem Frame befindet und der zweite Teil des Frames die Wake-up-Präambel umfasst.

6. Vorrichtung nach einem der Ansprüche 1 bis 5, wobei die Informationen, die in dem wenigstens einen OFDM-Symbol übertragen werden, ferner folgende Informationen umfassen: ein Ergebnis, das durch Durchführen einer XOR-Operation zwischen dem Inhalt der L-SIG und einer bekannten Bitsequenz erhalten wird, ein Modulations- und Codierungsschema des Frames und/oder eine Länge des Frames.

7. Vorrichtung nach einem der Ansprüche 1 bis 6, wobei, falls das wenigstens eine OFDM-Symbol anzeigt, dass der Frame ein WUR-Frame ist, die Informationen, die in dem wenigstens einen OFDM-Symbol übertragen werden, ferner Frame-Art-Anzeigeinformationen umfassen, die verwendet werden, um die Frame-Art des WUR-Frames anzuzeigen.

8. Vorrichtung nach einem der Ansprüche 1 bis 7, wobei die Frame-Art des WUR-Frames Folgende ist: ein Wake-up-Paket, das durch einen AP an eine STA gesendet wird, ein Wake-up-Funkbaken-Frame, der durch einen AP an eine STA gesendet wird, oder ein Wake-up-Paket, das durch eine STA an einen AP gesendet wird.

9. Vorrichtung nach einem der Ansprüche 1 bis 8, wobei die Informationen, die in dem wenigstens einen OFDM-Symbol übertragen werden, ferner Identifikationsinformationen einer Hauptkommunikationsschnittstelle einer Zielvorrichtung zum Empfangen des Frames oder Identifikationsinformationen einer zusätzlichen Wake-up-Schnittstelle der Zielvorrichtung zum Empfangen des Frames umfassen.

10. Vorrichtung nach einem der Ansprüche 1 bis 9, wobei der erste Teil des Frames eine Vermächtnis-802.11-Präambel umfasst und der zweite Teil des Frames einen Teil von oder alle WUR-Nutzinformationen umfasst.

11. Vorrichtung, wobei die Vorrichtung Folgendes umfasst:
ein Verarbeitungsmodul (720), das konfiguriert ist, um einen Frame zu erzeugen, wobei der Frame einen ersten Teil und einen zweiten Teil umfasst, wobei der zweite Teil des Frames nach dem ersten Teil gelegen ist, wobei der erste Teil ein L-SIG-Feld und wenigstens ein OFDM-Symbol umfasst, das nach dem L-SIG-Feld gelegen ist, und Informationen, die in dem wenigstens einen OFDM-Symbol übertragen werden, Anzeigeinformationen umfassen, die verwendet werden, um anzuzeigen, ob der Frame ein WUR-Frame ist; und
ein Sendemodul (710), das konfiguriert ist, um den Frame zu senden, wobei das L-SIG-Feld ein L-LENGTH-Feld umfasst, und falls der Frame ein WUR-Frame ist, das L-LENGTH-Feld verwendet wird, um eine Frame-Art des WUR-Frames anzuzeigen.

12. Vorrichtung nach Anspruch 11, wobei sich das wenigstens eine OFDM-Symbol in einer Wake-up-Präambel in dem Frame befindet, die Wake-up-Präambel in dem Frame nach dem L-SIG-Feld in dem Frame gelegen ist, und der zweite Teil des Frames den Inhalt umfasst, der nach dem wenigstens einen OFDM-Symbol in der Wake-up-Präambel gelegen ist.

13. Verfahren, das Schritte umfasst, die den Funktionen entsprechen, wie sie in dem Hauptkommunikationsmodul (910) und dem Verarbeitungsmodul (920) der Vorrichtung nach einem der Ansprüche 1 bis 10 implementiert sind.

14. Verfahren, das Schritte umfasst, die den Funktionen entsprechen, wie sie in dem Verarbeitungsmodul (720) und dem Sendemodul (710) der Vorrichtung nach Anspruch 11 oder 12 implementiert sind.

## Revendications

1. Dispositif, le dispositif comprenant :
un module de communication principal (910) configuré pour recevoir une première partie d'une trame, la première partie comprenant un champ L-SIG et au moins un symbole OFDM situé à la suite du champ L-SIG, et des informations contenues dans l'au moins un symbole OFDM comprennent des informations d'indication utilisées pour indiquer si la trame est une trame de récepteur de réveil, WUR ; et
un module de traitement (920) configuré pour :
déterminer, sur la base de l'au moins un symbole OFDM, si la trame est une trame WUR ; et
s'il est déterminé que la trame est une trame WUR, déterminer, sur la base au moins des informations contenues dans l'au moins un symbole OFDM, s'il faut continuer à recevoir une seconde partie de la trame à l'aide du module de communication principal, la seconde partie de la trame étant située à la suite de la première partie, le champ L-SIG comprenant un champ L-LENGTH, et le champ L-LENGTH étant utilisé pour indiquer un type de trame de la trame WUR si la trame est une trame WUR.

2. Dispositif selon la revendication 1, dans lequel le module de traitement est configuré pour :
déterminer, sur la base de l'au moins un symbole OFDM, si la trame est une trame WUR ; et
s'il est déterminé que la trame est une trame WUR, déterminer, sur la base au moins des informations contenues dans l'au moins un symbole OFDM, s'il faut continuer à recevoir une seconde partie de la trame à l'aide du module de communication principal comprend :
si l'au moins un symbole OFDM indique que la trame est une trame WUR et qu'un type de la trame est le type de trame de la trame WUR, la détermination, par le module de traitement, qu'il faut continuer à recevoir la seconde partie de la trame à l'aide du module de communication.

3. Dispositif selon l'une quelconque des revendications 1 à 2, dans lequel l'au moins un symbole OFDM se trouve dans un préambule de réveil dans la trame, le préambule de réveil dans la trame étant situé à la suite du champ L-SIG dans la trame, et la seconde partie de la trame comprend un contenu qui se trouve à la suite de l'au moins un symbole OFDM dans le préambule de réveil.

4. Dispositif selon la revendication 3, dans lequel l'au moins un symbole OFDM est N symboles OFDM, dans lequell 1 ≤ N ≤ M, et M est une quantité de symboles compris dans le préambule de réveil de la trame.

5. Dispositif selon l'une quelconque des revendications 1 à 2, dans lequel l'au moins un symbole OFDM se trouve entre le champ L-SIG et un préambule de réveil dans la trame, et la seconde partie de la trame comprend le préambule de réveil.

6. Dispositif selon l'une quelconque des revendications 1 à 5, dans lequel les informations contenues dans l'au moins un symbole OFDM comprennent en outre au moins l'une des informations suivantes :
un résultat obtenu en effectuant une opération XOR entre le contenu du L-SIG et une séquence de bits connue, un schéma de modulation et de codage de la trame, ou une longueur de la trame.

7. Dispositif selon l'une quelconque des revendications 1 à 6, dans lequel, si l'au moins un symbole OFDM indique que la trame est une trame WUR, les informations contenues dans l'au moins un symbole OFDM comprennent en outre des informations d'indication de type de trame utilisées pour indiquer le type de trame de la trame WUR.

8. Dispositif selon l'une quelconque des revendications 1 à 7, dans lequel le type de trame de la trame WUR est l'un des types suivants :
un paquet de réveil envoyé par un AP à une STA, une trame de balise radio de réveil envoyée par un AP à une STA ou un paquet de réveil envoyé par une STA à un AP.

9. Dispositif selon l'une quelconque des revendications 1 à 8, dans lequel les informations contenues dans l'au moins un symbole OFDM comprennent en outre des informations d'identification d'une interface de communication principale d'un dispositif cible destiné à recevoir la trame, ou des informations d'identification d'une interface de réveil auxiliaire du dispositif cible destiné à recevoir la trame.

10. Dispositif selon l'une quelconque des revendications 1 à 9, dans lequel la première partie de la trame comprend un préambule 802.11 existant, et la seconde partie de la trame comprend une partie ou la totalité d'une charge utile WUR.

11. Dispositif, le dispositif comprenant :
un module de traitement (720) configuré pour générer une trame, la trame comprenant une première partie et une seconde partie, la seconde partie de la trame étant située à la suite de la première partie, la première partie comprenant un champ L-SIG et au moins un symbole OFDM situé à la suite du champ L-SIG, et les informations contenues dans l'au moins un symbole OFDM comprenant des informations d'indication utilisées pour indiquer si la trame est une trame WUR ; et
un module d'envoi (710) configuré pour envoyer la trame, le champ L-SIG comprenant un champ L-LENGTH, et le champ L-LENGTH étant utilisé pour indiquer un type de trame de la trame WUR si la trame est une trame WUR.

12. Dispositif selon la revendication 11, dans lequel l'au moins un symbole OFDM se trouve dans un préambule de réveil dans la trame, le préambule de réveil dans la trame étant situé à la suite du champ L-SIG dans la trame, et la seconde partie de la trame comprend un contenu qui se trouve à la suite de l'au moins un symbole OFDM dans le préambule de réveil.

13. Procédé comprenant des étapes correspondant aux fonctions telles que mises en œuvre dans le module de communication principal (910) et le module de traitement (920) du dispositif selon l'une quelconque des revendications 1 à 10.

14. Procédé comprenant des étapes correspondant aux fonctions telles que mises en œuvre dans le module de traitement (720) et le module d'envoi (710) du dispositif selon les revendications 11 ou 12.
